# EUROPEAN PATENT APPLICATION

(11) **EP 4 113 668 A1**
(43) Date of publication of application: **04.01.2023**
(21) Application number: 21760835.5
(22) Date of filing: 24.02.2021
(51) Int. Cl.: H01M 4/62, C08F 8/12, H01M 4/13, H01M 4/139, H01M 4/36, H01M 4/38, H01M 4/48

(54) **PRODUCTION METHOD FOR POLYMER COMPOUND USED IN BINDER FOR SECONDARY BATTERIES**

(30) Priority: 26.02.2020 JP 2020030543
(71) Applicant: Sumitomo Seika Chemicals Co., Ltd., Kako-gun, Hyogo 675-0145 (JP)
(72) Inventor: KONO, Yuki, Kako-gun, Hyogo 675-0145 (JP); INUI, Moe, Kako-gun, Hyogo 675-0145 (JP); SAKKA, Mikio, Kako-gun, Hyogo 675-0145 (JP)
(74) Representative: Mewburn Ellis LLP
(86) International application number: PCT/JP2021/006947
(87) International publication number: WO 2021/172385

(57) **Abstract**

The present invention provides a method for producing a polymer compound for use as a binder for a secondary battery that exhibits reduced foaming when kneaded with an active material. A method for producing a polymer compound for use as a binder for a secondary battery, the polymer compound containing a repeating unit represented by formula (1) and a repeating unit represented by formula (2): 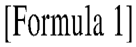 wherein each R¹ is independently a hydrogen atom or a methyl group, and each R² is independently an NH₂ group, an OH group, an ONa group, or an OLi group, the method comprising the steps of copolymerizing monomers for forming the polymer compound in the presence of an azo polymerization catalyst; and saponifying the resulting copolymer.

## Description

### Technical Field

The present invention relates to a method for producing a polymer compound for use as a binder for a secondary battery.

### Background Art

In recent years, with a growing interest in solving environmental issues, and realizing a sustainable recycling-based society, research on nonaqueous electrolyte secondary batteries, such as lithium-ion secondary batteries, has been actively made. Lithium-ion secondary batteries are used as power sources for notebook computers, mobile phones, electric vehicles, and the like, because of their high operating voltage and high energy density. In these applications, the lithium-ion secondary batteries need to be repeatedly charged and discharged, and reused, and thus, are required to have a longer battery life.

An electrode for a lithium-ion secondary battery is typically produced as follows: A mixture slurry for a battery electrode (hereinafter sometimes simply referred to as "the slurry"), obtained by mixing an active material (electrode active material), a conductive assistant, and the like into a solution or a slurry in which a binder for a battery electrode is dissolved in a solvent or dispersed in a dispersion medium, is applied to a current collector. Then, the solvent or the dispersion medium is removed using a method such as drying to bind between the active material and the current collector, and between particles of the active material.

### Citation List

### Patent Literature

Patent Literature 1: JP-A-7-240201
Patent Literature 2: JP-A-10-294112
Patent Literature 3: WO 2004/049475
Patent Literature 4: JP-A-10-302799
Patent Literature 5: WO 2014/207967

### Non Patent Literature

Non Patent Literature 1: "Lithium Secondary Batteries", p. 132 (published by Ohmsha Ltd. on March 20, 2008)

### Summary of Invention

### Technical Problem

With increasing use of lithium-ion secondary batteries, the use of various types of carbon materials (such as graphite) as negative electrode active materials that directly contribute to the electrode reaction has been studied, mainly for the purpose of increasing the battery capacity. For the purpose of further increasing the capacity of lithium-ion secondary batteries, various compounds have been proposed as electrode active materials that directly contribute to the electrode reaction. Silicon (Si), tin (Sn), and germanium (Ge) that can be alloyed with lithium, or oxides and alloys thereof, for example, have been studied as negative electrode active materials. These negative electrode active materials have higher theoretical capacity density than that of carbon materials. In particular, silicon-containing particles, such as silicon particles or silicon oxide particles, are inexpensive, and thus have been widely studied (see Patent Literatures 1 and 2 and Non Patent Literature 1).

However, it is known that when silicon-containing particles, such as silicon particles or silicon oxide particles, are used as a negative electrode active material, the volume of the negative electrode active material varies significantly because of the intercalation and deintercalation reactions of lithium ions during charge/discharge, and thus, the negative electrode mixture is peeled from the negative electrode current collector, and the negative electrode active material is easily removed.

Polyvinylidene fluoride (PVDF), which has heretofore been used as a binder, needs to be used in large amounts because of its low binding force and flexibility. Furthermore, because PVDF is soluble only in an organic solvent, there has been a need for a binder that can reduce the environmental burden (see Patent Literatures 3 and 4).

As an aqueous binder expected to provide the effect of reducing the environmental burden, a copolymer containing an unsaturated carboxylic acid derivative and a vinyl alcohol has been reported, and this binder has excellent binding force (Patent Literature 5). Unfortunately, the copolymer disclosed in Patent Literature 5 is likely to foam when kneaded with an active material, and may be insufficient in terms of ease of application to an electrode.

Under such circumstances, it is a main object of the present invention to provide a method for producing a polymer compound for use as a binder for a secondary battery that exhibits reduced foaming when kneaded with an active material, and a binder for a secondary battery obtained using the polymer compound. It is also an object of the present invention to provide an electrode for a secondary battery and a secondary battery.

### Solution to Problem

The present inventors have conducted extensive research to solve the above-described problem. As a result, they have found that, by employing a method for producing a polymer compound for use as a binder for a secondary battery, the polymer compound containing a repeating unit represented by formula (1) and a repeating unit represented by formula (2), the method comprising the steps of copolymerizing monomers for forming the polymer compound in the presence of an azo polymerization catalyst; and saponifying the resulting copolymer, it is possible to obtain a polymer compound that exhibits reduced foaming when kneaded with an active material. 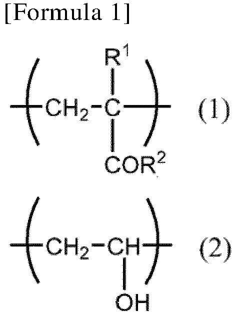 wherein each R¹ is independently a hydrogen atom or a methyl group, and each R² is independently an NH₂ group, an OH group, an ONa group, or an OLi group.

The present invention has been completed as a result of further research based on this finding.

In summary, the present invention provides aspects of the invention comprising the following features:
Item 1. A method for producing a polymer compound for use as a binder for a secondary battery,
   the polymer compound containing a repeating unit represented by formula (1) and a repeating unit represented by formula (2): 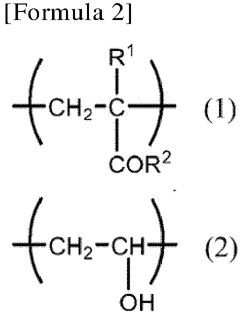
   wherein each R¹ is independently a hydrogen atom or a methyl group, and each R² is independently an NH₂ group, an OH group, an ONa group, or an OLi group,
   the method comprising the steps of:
      copolymerizing monomers for forming the polymer compound in the presence of an azo polymerization catalyst; and
      saponifying the resulting copolymer.
Item 2. The method according to item 1, wherein, in the repeating units constituting the polymer compound, a molar ratio of the repeating unit represented by formula (1) to the repeating unit represented by formula (2) is 5/95 to 95/5.
Item 3. A mixture for a secondary battery electrode comprising a binder for a secondary battery containing the polymer compound obtained by the method according to item 1 or 2, and an active material.
Item 4. The mixture for a secondary battery electrode according to item 3, wherein the active material contains a carbon material.
Item 5. The mixture for a secondary battery electrode according to item 3 or 4, wherein the active material contains at least one of silicon and silicon oxide.
Item 6. An electrode for a secondary battery comprising the mixture for a secondary battery electrode according to any one of items 3 to 5.
Item 7. A secondary battery comprising the electrode for a secondary battery according to item 6.
Item 8. A lithium-ion secondary battery comprising the electrode for a secondary battery according to item 6.

### Advantageous Effects of Invention

The present invention can provide a method for producing a polymer compound for use as a binder for a secondary battery that exhibits reduced foaming when kneaded with an active material, and a binder for a secondary battery. The present invention also aims to provide a mixture for a secondary battery electrode, an electrode for a secondary battery, and a secondary battery (such as a lithium-ion secondary battery) obtained using the binder for a secondary battery.

### Description of Embodiments

A method according to the present invention is a method for producing a polymer compound for use as a binder for a secondary battery (hereinafter sometimes referred to as "the binder"), the polymer compound containing a repeating unit represented by formula (1) and a repeating unit represented by formula (2), the method comprising the steps of copolymerizing monomers for forming the polymer compound in the presence of an azo polymerization catalyst; and saponifying the resulting copolymer. It has been found that, because of these features, the method for producing a polymer compound of the present invention can produce a polymer compound that exhibits reduced foaming when kneaded with an active material. The following describes in detail the method for producing a polymer compound of the present invention, and a mixture for a secondary battery electrode, an electrode for a secondary battery, and a secondary battery (such as a lithium-ion secondary battery) obtained using the method.

As used herein, the term "comprising" includes "consisting essentially of" and "consisting of". As used herein, the term "(meth)acrylic" refers to "acrylic or methacrylic", and the term "(meth)acrylate" refers to "acrylate or methacrylate".

As used herein, values connected with "to" refer to the numerical range including the values before and after "to" as the lower and upper limits. When a plurality of lower limits and a plurality of upper limits are mentioned separately, any lower limit and any upper limit may be selected and connected with "to".

### 1. Polymer Compound

The polymer compound produced by the method of the present invention is used as a binder for a secondary battery. The polymer compound is a copolymer containing a repeating unit represented by formula (1) and a repeating unit represented by formula (2).

Formula (1) represents an acrylic repeating unit. In formula (1), each R¹ is independently a hydrogen atom or a methyl group, and each R² is independently an NH₂ group, an OH group, an ONa group, or an OLi group. The polymer compound may contain at least one of the repeating unit in which R² is an NH₂ group, the repeating unit in which R² is an OH group, the repeating unit in which R² is an ONa group, and the repeating unit in which R² is an OLi group.

That is, the repeating unit of formula (1) contained in the polymer compound may be only the repeating unit in which R² is an NH₂ group, or only the repeating unit in which R² is an OH group, or only the repeating unit in which R² is an ONa group, or only the repeating unit in which R² is an OLi group. Alternatively, the polymer compound may contain the repeating unit of formula (1) in which R² is an NH₂ group and the repeating unit of formula (1) in which R² is an OH group; or may contain the repeating unit of formula (1) in which R² is an NH₂ group, the repeating unit of formula (1) in which R² is an OH group, and the repeating unit of formula (1) in which R² is an ONa group; or may contain the repeating unit of formula (1) in which R² is an NH₂ group, the repeating unit of formula (1) in which R² is an OH group, the repeating unit of formula (1) in which R² is an ONa group, and the repeating unit of formula (1) in which R² is an OLi group; or may contain the repeating unit of formula (1) in which R² is an OH group, and the repeating unit of formula (1) in which R² is an ONa group.

In the polymer compound, the total ratio of the repeating unit represented by formula (1) is not limited. From the viewpoint of further improving the binding force of the binder for a secondary battery, when the total ratio of repeating units constituting the polymer compound is taken as 100 mol%, the total ratio of the repeating unit represented by formula (1) is preferably 5 to 95 mol%, more preferably 5 to 80 mol%, and still more preferably 5 to 50 mol%.

The polymer compound of the present invention preferably contains a repeating unit represented by formula (2). The repeating unit represented by formula (2) is a vinyl alcohol repeating unit.

In the polymer compound, the total ratio of the repeating unit represented by formula (2) is not limited. From the viewpoint of further improving the binding force of the binder for a secondary battery of the present invention, when the total ratio of repeating units constituting the polymer compound is taken as 100 mol%, the total ratio of the repeating unit represented by formula (2) is preferably 5 to 95 mol%, more preferably 20 to 90 mol%, and still more preferably 50 to 90 mol%.

In the polymer compound, the acrylic repeating unit (the repeating unit represented by formula (1)) and the vinyl alcohol repeating unit (the repeating unit represented by formula (2)) may be arranged either randomly or as blocks, preferably randomly from the viewpoint of further increasing the binding force.

When the total ratio of repeating units constituting the polymer compound is taken as 100 mol%, the ratio of the sum of the total ratio of the acrylic repeating unit and the total ratio of the vinyl alcohol repeating unit in the polymer compound is preferably 80 mol% or more, more preferably 90 mol% or more, still more preferably 95 mol% or more, particularly preferably 95 mol% or more, and may even be 100 mol% (that is, the repeating units constituting the polymer compound may contain only the acrylic repeating unit and the vinyl alcohol repeating unit), from the viewpoint of favorably increasing the binding force.

The repeating units constituting the polymer compound may contain another repeating unit different from the repeating units represented by formulae (1) and (2). Such another repeating unit may be a repeating unit formed by a monomer copolymerizable with the monomers forming the repeating units represented by formulae (1) and (2). Examples of such copolymerizable monomers include monomers with ethylenically unsaturated bonds. Specific examples of monomers with ethylenically unsaturated bonds include styrene, vinyl chloride, ethylene, butadiene, vinylsulfonic acid, and maleic acid.

The number average molecular weight of the polymer compound is, for example, about 10,000 to 8,000,000, preferably about 30,000 to 1,000,000, although not limited thereto. The number average molecular weight of the polymer compound is the value as determined based on polyethylene glycol/polyethylene oxide standards by gel permeation chromatography (GPC).

### 2. Method for Producing Polymer Compound

The method for producing a polymer compound of the present invention comprises the steps of copolymerizing monomers for forming the polymer compound in the presence of an azo polymerization catalyst; and saponifying the resulting copolymer. The monomers include a monomer forming the repeating unit represented by formula (1) and a monomer forming the repeating unit represented by formula (2). These monomers are polymerized in the presence of a polymerization catalyst to give a copolymer, and the copolymer is saponified in an aqueous organic solvent/water solvent mixture, in the presence of an alkali, to produce the polymer compound.

Examples of the monomer forming the repeating unit represented by formula (1) include methyl esters, ethyl esters, n-propyl esters, iso-propyl esters, n-butyl esters, t-butyl esters, and acrylamide of acrylic acid or methacrylic acid. These monomers can form the repeating unit represented by formula (1) through the steps of being copolymerized and then saponified. From the viewpoint of, for example, smooth progress of the below-described saponification reaction, methyl acrylate and methyl methacrylate are preferred. These monomers may be used alone or in combinations of two or more.

Examples of the monomer forming the repeating unit represented by formula (2) include vinyl acetate and vinyl propionate. These monomers can form the repeating unit represented by formula (2) through the steps of being copolymerized and then saponified. Of the above, vinyl acetate is preferably used, from the viewpoint of, for example, material cost. These monomers may be used alone or in combinations of two or more.

The molar ratio of the monomer forming the repeating unit represented by formula (1) to the monomer forming the repeating unit represented by formula (2) is preferably 5/95 to 95/5, more preferably 10/90 to 70/30, and still more preferably 20/80 to 60/40. If the molar ratio of the monomer forming the repeating unit represented by formula (1) is less than 5/95, the polymer compound has insufficient binding force when used as binder; whereas if the molar ratio is above 95/5, the polymer compound may become brittle when used as a binder, which is undesirable.

In the method for producing a polymer compound of the present invention, an azo polymerization catalyst is used as a polymerization catalyst for copolymerizing the monomers. The azo polymerization catalyst is a polymerization catalyst containing an azo bond, specifically including 2.2-azobisisobutyronitrile (AIBN), 2.2-azobis2.4-dimethylvaleronitrile (V-65), 2.2-azobis-2-methylbutyronitrile (V-59), and dimethyl-2.2-azobis-2-methylpropionate (V-601), with AIBN and V-601 being preferred. In the present invention, the use of an azo polymerization catalyst can reduce foaming of the resulting polymer compound during kneading with an active material when the polymer compound is used as a binder for a secondary battery. Reducing foaming during the kneading can not only improve workability, but can also improve the binding force of the polymer compound when used as a binder for a secondary battery.

The amount of the polymerization catalyst to be added is preferably 0.01 to 5% by mass, more preferably 0.05 to 3% by mass, and still more preferably 0.1 to 3% by mass, relative to the total mass of the monomers. If the amount of the polymerization catalyst is less than 0.01% by mass, the polymerization reaction may not be completed; whereas if it is above 5% by mass, the binding force of the resulting polymer compound when used as a binder for a secondary battery may be decreased.

The temperature at which the monomers are polymerized is preferably -20 to +20°C, and more preferably -10 to +10°C, relative to the 10-hour half-life temperature of the polymerization catalyst. If the temperature at which the monomers are polymerized is less than -20°C relative to the 10-hour half-life temperature, the polymerization reaction may not be completed; whereas if the temperature is above +20°C, the binding force of the polymer compound may not be sufficient.

The time for which the monomers are polymerized is typically from several to several tens of hours, although it may depend on the polymerization temperature, the type and amount of the polymerization catalyst used, and the like. When the monomers are polymerized, the monomers may be added at once to a vessel, or may be added to a vessel in two to several divided portions, before the reaction is initiated. From the viewpoint of stabilizing the particle diameter of the polymer compound, the monomers are preferably added in divided portions. That is, the polymerization reaction of the monomers is preferably carried out in a plurality of divided portions. When the polymerization reaction of the monomers is carried out in a plurality of (such as about two to five) divided portions, the monomers are preferably added at periods where 80% or more of the monomers are consumed. For example, when the polymerization reaction of the monomers is carried out in two divided portions, the addition of the monomers to carry out the first polymerization reaction (first addition) and the addition of the monomers to carry out the second polymerization reaction (second addition) are preferably performed, for example, after the monomer residual ratio in the reaction system reaches 20% or less. In this case, between the first and second additions, the first polymerization reaction is substantially completed, and the second polymerization reaction is initiated successively by the second addition.

The resulting copolymer preferably has a mass average particle diameter of 10 to 500 µm, more preferably 10 to 400 µm. If the mass average particle diameter is less than 10 µm, the reaction system may significantly thicken during the saponification, and stirring cannot be performed; whereas if the mass average particle diameter is above 500 µm, the saponification reaction may not be completed.

After the completion of the polymerization reaction, the copolymer is separated by a method such as centrifugation or filtration, and obtained in the form of a hydrous cake. The resulting copolymer in the form of a hydrous cake may be subjected to the saponification reaction, either as is, or optionally after being dried. When the copolymer in the form of a hydrous cake is dried, it is typically dried at 100°C or less to prevent fusion of the particles.

The method for producing a polymer compound of the present invention further comprises the step of saponifying the copolymer obtained in the preceding step. The copolymer can be saponified in an aqueous organic solvent/water solvent mixture, in the presence of an alkali.

While the alkali may be any conventionally known alkali, it is preferably an alkali metal hydroxide, and more preferably sodium hydroxide, potassium hydroxide, or lithium hydroxide from the viewpoint of their high reactivity.

The amount of the alkali is preferably 60 to 140 mol%, and more preferably 80 to 120 mol%, based on the total number of moles of the monomers. If the amount of the alkali is less than 60 mol%, the saponification may be insufficient; whereas if the amount of the alkali is above 140 mol%, a commensurate effect cannot be obtained, which is uneconomical.

Examples of the aqueous organic solvent include lower alcohols, such as methanol, ethanol, n-propanol, isopropanol, n-butanol, and t-butanol; ketones, such as acetone and methyl ethyl ketone; and mixtures thereof. Preferred among these are lower alcohols, with methanol and ethanol being particularly preferred, because of the ease of removing residual solvent.

The mass ratio of the aqueous organic solvent/water solvent mixture is preferably 3/7 to 8/2, more preferably 3/7 to 7/3, and still more preferably 4/6 to 6/4. If the ratio of the aqueous organic solvent is less than 3/7, the resistance to mechanical shear of the thickened aqueous solution decreases, and additionally, the solution significantly thickens during the saponification reaction, making it difficult to produce the polymer compound on an industrial scale. If the ratio of the aqueous organic solvent falls outside the above-mentioned range, variations in the degree of saponification are produced, leading to decreased dispersibility of the active material when the polymer compound is used as a binder.

As a specific example of the saponification reaction, a saponification reaction in which a vinyl acetate/methyl acrylate copolymer is 100% saponified with NaOH is shown below:

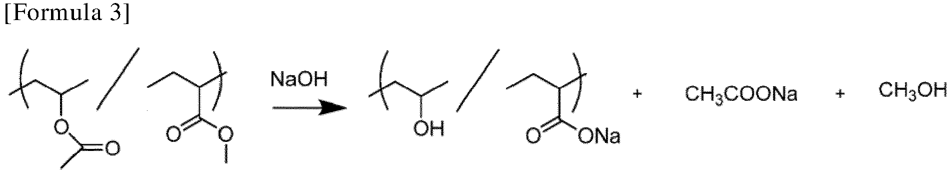

### 3. Binder for Secondary Battery

The polymer compound of the present invention is used as a binder for a secondary battery.

In the binder for a secondary battery, the ratio of the polymer compound is preferably 80% by mass or more, more preferably 90% by mass or more, and still more preferably 95% by mass or more, and may even be 100% by mass (that is, the binder of the present invention may contain only the polymer compound), as long as the binder exhibits excellent binding force.

The binder for a secondary battery of the present invention may contain another binder material different from the polymer compound. Examples of other binder materials include aqueous binders soluble or dispersible in water. Specific examples of other binder materials include carboxymethylcellulose (CMC), acrylic resin, sodium polyacrylate, sodium alginate, polyimide (PI), polyamide, polyamideimide, polyacryl, styrene-butadiene rubber (SBR), styrene-ethylene-butylene-styrene copolymer (SEBS), polyvinyl alcohol (PVA), and ethylene vinyl acetate copolymer (EVA). These other binder materials may be contained alone or in combinations of two or more, in the binder of the present invention. When another binder material is contained in the binder of the present invention, the content can be adjusted appropriately in the range of 0 to 100 parts by mass per 100 parts by mass of the polymer compound.

The binder for a secondary battery of the present invention is suitable for use as a binder for a secondary battery, particularly as a binder contained in a mixture for a secondary battery electrode. For a secondary battery electrode, the binder can be applied to both positive and negative electrodes.

### 4. Mixture for Secondary Battery Electrode

The mixture for a secondary battery electrode of the present invention (hereinafter sometimes referred to as "the electrode mixture") comprises the binder for a secondary battery of the present invention and an active material. As described above, the binder of the present invention, which has excellent binding force, is suitable for use as a mixture for a secondary battery electrode, together with the active material.

In the electrode mixture of the present invention, the content of the binder of the present invention is preferably 0.5 to 40% by mass, more preferably 1 to 25% by mass, and still more preferably 1.5 to 10% by mass. When the content of the binder of the present invention is 0.5% by mass or more, deterioration of cycle life characteristics due to insufficient binding force, agglomeration due to an insufficient viscosity of the slurry, and the like can be prevented. On the other hand, when the binder content is 40% by mass or less, a high capacity tends to be obtained upon charge/discharge of the battery.

The electrode mixture of the present invention can be produced by using the binder of the present invention, using known methods. For example, the electrode mixture can be produced by mixing the active material, the binder of the present invention, water, and optionally a conductive assistant, a dispersion assistant, and the like, to form a pasty slurry. The timing of adding water is not limited. The binder of the present invention may be previously dissolved in water and then mixed with the active material and the like to form a slurry. Alternatively, the active material, the binder of the present invention, and optionally a conductive assistant, a dispersion assistant, and the like may be mixed together in a solid state, and then water may be added to form a pasty slurry.

In the electrode mixture of the present invention, the ratio of water is preferably 40 to 2,000 parts by mass, and more preferably 50 to 1,000 parts by mass, per 100 parts by mass of solids in the electrode mixture. When the ratio of water is in the above-defined range, handleability of the electrode mixture (slurry) of the present invention tends to be further improved.

### [Active Material]

The active material is an electrode active material, including a negative electrode active material and a positive electrode active material. When the active material is a negative electrode active material, it may contain, for example, a carbon material, and may also contain at least one of silicon and silicon oxide. Specific materials of the negative electrode active material and the positive electrode active material are described below.

### (Negative Electrode Active Material)

Negative electrode active materials used in the art may be used without limitation as the negative electrode active material, for example, carbon materials, such as crystalline carbon or amorphous carbon. Examples of crystalline carbon include graphite such as natural or artificial graphite in an amorphous, plate-like, flake, spherical or fibrous form. Examples of amorphous carbon include soft carbon (graphitizable carbon) or hard carbon (non-graphitizable carbon), mesophase pitch carbide, and calcined coke. Moreover, a material capable of intercalation and deintercalation of a large number of lithium ions, such as silicon (Si), tin (Sn), or Ti (titanium), may also be used as the negative electrode active material. Any such materials, which may be in the form of any of a single material, an alloy, a compound, a solid solution, and a composite active material containing a silicon-containing material, a tin-containing material, and a titanium-containing material, can exhibit the effects of the present invention. The silicon-containing material may be Si, SiOx (0.05 < x < 1.95), or an alloy, a compound, or a solid solution thereof obtained by partially substituting Si with at least one element selected from the group consisting of B, Mg, Ni, Ti, Mo, Co, Ca, Cr, Cu, Fe, Mn, Nb, Ta, V, W, Zn, C, N, and Sn. These materials may be referred to as silicon or silicon oxide. The tin-containing material may be Ni₂Sn₄, Mg₂Sn, SnOx (0 < x < 2), SnO₂, SnSiO₃, or LiSnO, for example. The titanium-containing material may be a lithium titanate, such as Li₂TiO₃ or Li₄Ti₅O₁₂, or a titanium-niobium composite compound, for example. These materials may be used alone or in combinations of two or more. Preferred among these is silicon or silicon oxide, such as Si alone or silicon oxide.

More preferred as the negative electrode active material is a composite obtained by mixing first and second negative electrode active materials, using silicon or silicon oxide as the first negative electrode active material, and a carbon material as the second negative electrode active material. In this case, the mixture ratio of the first and second negative electrode active materials is preferably 5/95 to 95/5 in terms of mass ratio. Any carbon materials commonly used in nonaqueous electrolyte secondary batteries may be used as the carbon material, and representative examples include crystalline carbon, amorphous carbon, or a combination thereof. Examples of crystalline carbon include graphite such as natural or artificial graphite in an amorphous, plate-like, flake, spherical or fibrous form. Examples of amorphous carbon include soft carbon or hard carbon, mesophase pitch carbide, and calcined coke.

The method for producing the negative electrode active material is not limited. To produce the active material composite formed of the mixture of the first and second negative electrode active materials, the method is not limited as long as it can homogeneously disperse these active materials. An example of methods for producing the negative electrode active material is a method in which the first and second negative electrode active materials are mixed in a ball mill. Another example is a method in which a precursor of the second negative electrode active material is deposited on the surface of the particles of the first negative electrode active material, and then carbonized by a heat-treatment method. The precursor of the second negative electrode active material may be any carbon precursor that can be formed into a carbon material by heat treatment, and examples include glucose, citric acid, pitch, tar, and binder materials (such as polyvinylidene fluoride, carboxymethylcellulose, acrylic resin, sodium polyacrylate, sodium alginate, polyimide, polytetrafluoroethylene, polyamide, polyamideimide, polyacryl, styrene-butadiene rubber, polyvinyl alcohol, and ethylene-vinyl acetate copolymer).

The heat-treatment method is a method in which the carbon precursor is subjected to heat treatment at 600 to 4,000°C in a non-oxidizing atmosphere (an atmosphere that prevents oxidation, such as a reducing atmosphere, an inert atmosphere, or a reduced pressure atmosphere) and carbonized to have conductivity.

### (Positive Electrode Active Material)

Any positive electrode active materials used in the art may be used without limitation as the positive electrode active material. The positive electrode active material may be a lithium-containing composite oxide, for example. Examples of lithium-containing composite oxides include LiMnO₂, LiFeO₂, LiFePO₄, LiCoO₂, LiMn₂O₄, Li₂FeSiO₄, LiNi_{1/3}Co_{1/3}Mn_{1/3}O₂, LiNi_{0.5}Co_{0.2}Mn_{0.3}O₂, LiNi_{0.6}CO_{0.2}Mn_{0.2}O₂, LiNi_{0.8}Co_{0.8}Mn_{0.1}O₂, and LiNiₓCo_{y}M_{z}O₂ (wherein 0.01 < x < 1, 0 ≤ y ≤ 1, 0 ≤ z ≤ 1, x + y + z = 1, and M is at least one element selected from the group consisting of Mn, V, Mg, Mo, Nb, Fe, Cu, and Al).

### [Conductive Assistant]

Any conductive assistants used in the art may be used without limitation as the conductive assistant. While the conductive assistant is not limited as long as it has conductivity, the conductive assistant is preferably carbon powder. Examples of carbon powder include commonly used carbon materials, such as acetylene black (AB), Ketjen black (KB), graphite, carbon fibers, carbon tubes, graphene, amorphous carbon, hard carbon, soft carbon, glassy carbon, carbon nanofibers, and carbon nanotubes. These materials may be used alone or in combinations of two or more.

While the ratio of the conductive assistant is not limited, it is preferably 0.1 to 30% by mass, more preferably 0.5 to 10% by mass, and still more preferably 2 to 5% by mass, relative to total 100% by mass of the active material, the binder, and the conductive assistant. If the ratio of the conductive assistant is less than 0.1% by mass, the conductivity of the electrode may not be sufficiently improved. If the ratio of the conductive assistant is above 30% by mass, this is undesirable in that: the ratio of the active material relatively decreases, which makes it difficult to obtain a high capacity upon charge/discharge of the battery; carbon repels water, which makes it difficult to homogeneously disperse the active material, leading to agglomeration of the active material; and the amount of the binder to be used increases because the conductive assistant is smaller in size, and thus, is larger in surface area than the active material.

### [Dispersion Assistant]

The electrode mixture of the present invention may further contain a dispersion assistant. While the dispersion assistant is not limited, it is preferably a humic acid or an organic acid containing a carboxy group and at least one substituent selected from the group consisting of a hydroxyl group, an amino group, and an imino group. Examples of organic acids having a hydroxyl group and a carboxy group include lactic acid, tartaric acid, citric acid, malic acid, glycolic acid, tartronic acid, glucuronic acid, and humic acid. Examples of organic acids having an amino group and a carboxy group include glycine, alanine, phenylalanine, 4-aminobutyric acid, leucine, isoleucine, lysine, glutamic acid, aspartic acid, glutamine, asparagine, histidine, tryptophan, cysteine, and polymers thereof. Examples of organic acids having an imino group and a carboxy group include proline, 3-hydroxyproline, 4-hydroxyproline, and pipecolic acid. Preferred among these are glucuronic acid, humic acid, glycine, polyglycine, aspartic acid, and glutamic acid, because they are readily available.

The ratio of the dispersion assistant may be 0.01 part by mass or more, relative to total 100 parts by mass of the active material, the binder, and the conductive assistant, in order to finely disperse the active material and the like efficiently and effectively during the preparation of an active material dispersion. To maintain the fine dispersibility and dispersion stability, a sufficient amount of the dispersion assistant to be added is 5.0 parts by mass or less.

The electrode mixture of the present invention may contain other conventional additives and the like.

In the electrode mixture of the present invention, the binder of the present invention is used for the purpose of bonding particles of the active material, bonding the active material and the conductive assistant, and bonding the active material or the conductive assistant and a current collector. That is, the binder of the present invention is used to form a satisfactory active material layer when the slurry is applied onto the current collectors of both electrodes, and dried.

### 5. Electrode for Secondary Battery

The electrode for a secondary battery of the present invention (hereinafter sometimes referred to as "the electrode") comprises the above-described mixture for a secondary battery electrode of the present invention. The electrode of the present invention is produced by using the mixture for a secondary battery electrode of the present invention (i.e., using the binder of the present invention), according to methods employed in the art. That is, the electrode of the present invention can be produced by, for example, applying the electrode mixture of the present invention onto a current collector, and drying.

When the electrode of the present invention is a negative electrode, the material constituting the current collector may be, for example, a conductive material such as C, Cu, Ni, Fe, V, Nb, Ti, Cr, Mo, Ru, Rh, Ta, W, Os, Ir, Pt, Au, or AI, or an alloy containing two or more of these conductive materials (such as stainless steel). Alternatively, the current collector may be Fe plated with Cu. The material constituting the current collector of the negative electrode is preferably Cu, Ni, or stainless steel, for example, in that they have high electrical conductivity, and have excellent oxidation resistance and stability in an electrolytic solution. Cu or Ni is preferred in terms of material cost.

When the electrode of the present invention is a positive electrode, the material constituting the current collector may be, for example, a conductive material such as C, Ti, Cr, Mo, Ru, Rh, Ta, W, Os, Ir, Pt, Au, or Al, or an alloy containing two or more of these conductive materials (such as stainless steel). The material constituting the current collector of the positive electrode is preferably C, Al, or stainless steel, for example, in that they have high electrical conductivity, and have excellent oxidation resistance and stability in an electrolytic solution. Al is preferred in terms of material cost.

The shape of the current collector may be, for example, a foil-like substrate or a three-dimensional substrate, although not limited thereto. The use of a three-dimensional substrate (such as a metal foam, a mesh, a woven fabric, a nonwoven fabric, or an expanded metal) provides an electrode having a high capacity density, even if the binder has poor adhesion to the current collector. Additionally, satisfactory high-rate charge/discharge characteristics are achieved.

### 6. Secondary Battery

The secondary battery of the present invention comprises the above-described electrode for a secondary battery of the present invention. The secondary battery of the present invention may comprise the electrode for a secondary battery of the present invention as either one of or both a positive electrode and a negative electrode. The secondary battery of the present invention is produced by using the electrode for a secondary battery of the present invention (i.e., using the binder of the present invention), according to methods employed in the art.

The secondary battery of the present invention is preferably a nonaqueous electrolyte secondary battery, particularly a lithium-ion secondary battery. Because the lithium-ion secondary battery must contain lithium ions, the electrolyte is preferably a lithium salt. Examples of the lithium salt include lithium hexafluorophosphate, lithium perchlorate, lithium tetrafluoroborate, lithium trifluoromethanesulfonate, and lithium trifluoromethanesulfonimide. These electrolytes may be used alone or in combinations of two or more.

Examples of electrolytic solutions include propylene carbonate, ethylene carbonate, dimethyl carbonate, diethyl carbonate, and γ-butyrolactone. These electrolytic solutions may be used alone or in combinations of two or more. Particularly preferred is propylene carbonate alone, a mixture of ethylene carbonate and diethyl carbonate, or γ-butyrolactone alone. In the mixture of ethylene carbonate and diethyl carbonate, the mixture ratio can be adjusted as desired such that the ratio of one component falls within the range of 10 to 90% by volume.

Known secondary battery structures can be similarly employed for other secondary batteries.

### Examples

The present invention will be hereinafter described in detail with reference to examples and comparative examples, although the present invention is not limited to the examples.

### [Synthesis of Binder for Secondary Battery]

### (Example 1)

In a reaction vessel equipped with a stirrer, a thermometer, a N₂ gas inlet tube, a reflux condenser, and a dropping funnel, 768 parts by mass of water and 12 parts by mass of anhydrous sodium sulfate were placed, and N₂ gas was blown into the reaction vessel to deoxidize the system. Subsequently, monomers were added in divided portions, and the polymerization reaction was carried out in two divided portions to produce a copolymer. Specifically, in the first addition, 1 part by mass of partially saponified polyvinyl alcohol (degree of saponification: 88%), 1 part by mass of azobisisobutyronitrile (AIBN), 15.5 parts by mass of methyl acrylate, and 62 parts by mass of vinyl acetate were reacted for 1 hour (first polymerization reaction). In the subsequent second addition, 36.3 parts by mass of methyl acrylate and 146 parts by mass of vinyl acetate were further added and reacted for 4 hours (second polymerization reaction). Then, the inside temperature was maintained at 65°C for 2 hours. Then, the solids were filtered off. In the same reaction vessel as above, the solids, 450 parts by mass of methanol, 420 parts by mass of water, and 132 parts by mass of sodium hydroxide were placed, and the mixture was stirred at 30°C for 3 hours. After completion of stirring, the solid was filtered off and then washed with methanol, and dried at 70°C for 8 hours to obtain a vinyl alcohol/acrylic acid ester copolymer (polymer compound). The number average molecular weight of the obtained copolymer was measured using a molecular weight measuring apparatus (2695 and an RI detector 2414 manufactured by Waters Corporation). The number average molecular weight of the copolymer calculated relative to polyethylene glycol/polyethylene oxide standards was 56,000.

### [Evaluation of Foaming]

3 parts by mass (3 g) of the obtained copolymer was dissolved in 97 parts by mass (97 g) of water to obtain an aqueous solution of a binder (binder composition). Next, the aqueous solution was poured into a glass bottle with a diameter of 45 mm and a height of 110 mm up to a level of 70 mm. Then, a disper with a diameter of 35 mm was attached to the glass bottle up to a height of 35 mm, and the aqueous solution was stirred at 2,000 rpm for 1 minute. After the stirring, if the solution was substantially free from foaming, it was evaluated as O, and if the whole solution foamed, it was evaluated as ×. The result is shown in Table 1. It should be noted that if the foaming is evaluated after an active material is added to the solution, the solution turns black, which makes the evaluation of foaming difficult. Thus, this evaluation was performed without adding an active material, in view of facilitating determination of the evaluation result. Since the presence of an active material has little effect on foaming, if the solution is substantially free from foaming, the solution is evaluated herein to exhibit reduced foaming when kneaded with an active material.

### (Example 2)

A vinyl alcohol/acrylic acid ester copolymer (polymer compound) was obtained as in Example 1, except that azobisisobutyronitrile was replaced by dimethyl-2.2-azobis-2-methylpropionate (V-601). The molecular weight of the obtained copolymer was measured in the same manner as above. The number average molecular weight of the copolymer calculated relative to polyethylene glycol/polyethylene oxide standards was 52,000.

### [Evaluation of Foaming]

The obtained copolymer was used to prepare an aqueous solution of a binder as in Example 1, and the evaluation of foaming was performed. The result is shown in Table 1.

### (Comparative Example 1)

A vinyl alcohol/acrylic acid ester copolymer (polymer compound) was obtained as in Example 1, except that azobisisobutyronitrile was replaced by lauroyl peroxide (LPO). The molecular weight of the obtained copolymer (polymer compound) was measured in the same manner as above. The number average molecular weight of the copolymer calculated relative to polyethylene glycol/polyethylene oxide standards was 55,000.

### [Evaluation of Foaming]

The obtained copolymer was used to prepare an aqueous solution of a binder as in Example 1, and the evaluation of foaming was performed. The result is shown in Table 1.

**[Table 1]**

| | Polymerization Catalyst | Foaming |
|---|---|---|
| Example 1 | AIBN | ○ |
| Example 2 | V-601 | ○ |
| Comparative Example 1 | LPO | × |

## Claims

1. A method for producing a polymer compound for use as a binder for a secondary battery,
the polymer compound containing a repeating unit represented by formula (1) and a repeating unit represented by formula (2): 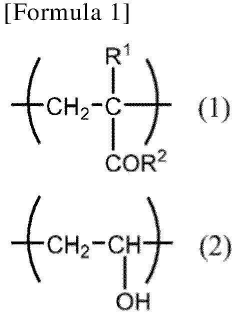
wherein each R¹ is independently a hydrogen atom or a methyl group, and each R² is independently an NH₂ group, an OH group, an ONa group, or an OLi group,
the method comprising the steps of:
copolymerizing monomers for forming the polymer compound in the presence of an azo polymerization catalyst; and
saponifying the resulting copolymer.

2. The method according to claim 1, wherein, in the repeating units constituting the polymer compound, a molar ratio of the repeating unit represented by formula (1) to the repeating unit represented by formula (2) is 5/95 to 95/5.

3. A mixture for a secondary battery electrode comprising a binder for a secondary battery containing the polymer compound obtained by the method according to claim 1 or 2, and an active material.

4. The mixture for a secondary battery electrode according to claim 3, wherein the active material contains a carbon material.

5. The mixture for a secondary battery electrode according to claim 3 or 4, wherein the active material contains at least one of silicon and silicon oxide.

6. An electrode for a secondary battery comprising the mixture for a secondary battery electrode according to any one of claims 3 to 5.

7. A secondary battery comprising the electrode for a secondary battery according to claim 6.

8. A lithium-ion secondary battery comprising the electrode for a secondary battery according to claim 6.
